# EUROPEAN PATENT APPLICATION

(11) **EP 2 581 196 A1**
(43) Date of publication of application: **17.04.2013**
(21) Application number: 11792511.5
(22) Date of filing: 09.06.2011
(51) Int. Cl.: B29C 45/26, B29C 33/02, B29C 45/02

(54) **MANUFACTURING METHOD FOR MOLDED RUBBER, AND METAL MOLD FOR USE IN TRANSFER MOLDING**

(30) Priority: 11.06.2010 JP 2010134277
(71) Applicant: Toyo Tire & Rubber Co., Ltd., Osaka-shi, Osaka 550-8661 (JP)
(72) Inventor: FUJIMOTO,Kenji, Osaka-shi Osaka 550 8661 (JP); MATSUURA,Hiroyoshi, Osaka-shi Osaka 550 8661 (JP); TSUJIMOTO,Masami, Osaka-shi Osaka 550 8661 (JP)
(74) Representative: Kloiber, Thomas
(86) International application number: PCT/JP2011/063209
(87) International publication number: WO 2011/155554

(57) **Abstract**

The present invention has an object to provide a method for manufacturing a rubber molded product that can fill unvulcanized rubber into a die while preventing bubbles or incomplete filling, and can maintain satisfactory rubber properties after vulcanization molding. Specifically, the method for manufacturing a rubber molded product (7) is provided in which unvulcanized rubber filled into a die (1) is demolded after being heated and vulcanized, including the steps of: dividing a space in the die (1) into a plurality of regions (18a to 18h); and repeating a process of fitting a block (19) into each of regions other than one region among the plurality of regions, and thus filling the unvulcanized rubber into the one region with the remaining regions being filled with the blocks (19) without clearance, and then removing one of the blocks (19) and filling the unvulcanized rubber into an empty region, thereby filling the unvulcanized rubber into all the regions.

## Description

### Technical Field

The present invention relates to a method for manufacturing a bulk rubber molded product, and more particularly to a method for manufacturing a rubber molded product that can be favorably applied to a large rubber molded product such as a stopper for an air spring of a vehicle or the like.

### Background Art

Conventionally, a known air spring used in a railway vehicle or the like includes an upper surface plate mounted to a vehicle body, a lower surface plate placed on a wheel side below the upper surface plate, a rubber diaphragm placed across the upper surface plate and the lower surface plate, and an elastic mechanism (stopper) interposed between the lower surface plate and a support frame on the wheel side as disclosed in Patent Literature 1. The stopper regulates vertical fluctuation of the vehicle body, and generally has a multilayer rubber structure including a rubber layer and a steel plate alternately laminated.

If air pressure in the diaphragm of the air spring is insufficient for some reason, the upper surface plate sits on the lower surface plate. In such a case, the stopper having the multilayer rubber structure has particularly low cushioning properties in a vertical direction, thereby significantly reducing riding comfort.

To address such a problem, an air spring using a bulk integral rubber molded product as a stopper is known as disclosed in Patent Literature 2. The stopper in Patent Literature 2 has a shape of an inverted thick bowl-like rubber molded product. Specifically, the stopper has a hemispherical shape with a space formed therein, and is more easily elastically deformed in a vertical direction than the stopper having the multilayer rubber structure. Thus, if air pressure in a diaphragm is insufficient, riding comfort can be maintained to some extent as compared to the stopper having the multilayer rubber structure.

Since a heavy load is applied to the stopper described above, it is important that the entire rubber molded product is firmly integrated. However, when a large rubber molded product such as the stopper is molded with a die, and a large amount of unvulcanized rubber is to be filled into the die at one time, a gas may remain as bubbles in the unvulcanized rubber or incomplete filling of rubber may occur. Such bubbles or incomplete filling of rubber may reduce rubber properties after vulcanization.

Also, when a large amount of unvulcanized rubber is filled into a die at one time, it takes a long time to fill the unvulcanized rubber from start to end. In particular, an injection molding method often used as a method for molding rubber needs to heat the unvulcanized rubber to a high temperature for injection in order to ensure fluidity. Thus, the unvulcanized rubber injected into the die immediately after the start of filling is overheated before the end of filling, thereby causing, so-called, burns that reduce rubber properties after vulcanization.

Patent Literatures 3 and 4 are known as solutions to inconvenience in forming a large rubber molded product. Specifically, Patent Literature 3 describes a method of inserting an extrusion nozzle into a die and filling unvulcanized rubber while moving the nozzle. Patent Literature 4 describes a method of wrapping an unvulcanized rubber sheet around a rotating shaft as a method often used in forming a large cylindrical body such as a rubber roll or a fender.

### Citation List

### Patent Literature

Patent Literature 1: Japanese Patent Laid-Open No. 2007-127168
Patent Literature 2: Japanese Patent Laid-Open No. 60-226308
Patent Literature 3: Japanese Patent Laid-Open No. 2002-210753
Patent Literature 4: Japanese Patent Laid-Open No. 2000-303431

### Summary of Invention

### Technical Problem

However, in the methods described in Patent Literatures 3, for a rubber molded product having a spherical shape, pressure is not evenly applied to each section, and incomplete filling due to rubber flowing occurs. Also, a diameter of the extrusion nozzle needs to be increased in order to smoothly inject unvulcanized rubber into the die, which limits movement of the extrusion nozzle.

The method described in Patent Literature 4 is the method of wrapping the unvulcanized rubber sheet around the rotating shaft, and is thus unsuitable for forming a solid rubber molded product or a spherical rubber molded product and provides a weak joining force between rubber sheets.

Thus, in view of the above problems, the present invention has an object to provide a method for manufacturing a rubber molded product that can fill unvulcanized rubber into a die while preventing bubbles or incomplete filling, and can maintain satisfactory rubber properties after vulcanization molding.

### Solution to Problem

To achieve the object, the present invention provides a method for manufacturing a rubber molded product in which unvulcanized rubber filled into a die through an inlet formed in the die is demolded after being heated and vulcanized, including the steps of: dividing a space in the die into a plurality of regions; and repeating a process of filling the unvulcanized rubber into each of the regions, thereby filling the unvulcanized rubber into all the regions.

With the configuration described above, the space in the die is divided into the plurality of regions, and the unvulcanized rubber is filled for each region. Thus, the unvulcanized rubber can be filled into the die under pressure, thereby preventing bubbles or incomplete filling. This can maintain satisfactory rubber properties after vulcanization.

The method for manufacturing a rubber molded product according to the present invention is effective for manufacturing a rubber molded product having a volume of 10 liters or more, and particularly effective for manufacturing a rubber molded product having a volume of 15 liters or more.

In order to carry out the method for manufacturing a rubber molded product of the present invention, for example, a partition member that partitions one region from the other regions may be used. Also, a block that can fill each region without clearance may be used.

A method for manufacturing a rubber molded product using the block will be described in detail. First, a block is fitted into each of regions other than a region communicating with the inlet among the plurality of regions, and thus the unvulcanized rubber is filled into an empty region with the remaining regions being filled with the blocks without clearance. Then, a process of displacing the inlet relative to the plurality of regions to remove the block in a region that newly communicates with the inlet, and filling the unvulcanized rubber into an empty region may be repeated to fill the unvulcanized rubber into all the regions.

One inlet may be formed in the die. If a plurality of inlets are formed in the die, the unvulcanized rubber can be simultaneously filled into the plurality of regions through the plurality of inlets. This can reduce a time for filling the unvulcanized rubber. Specifically, in the present invention, filling the unvulcanized rubber into each region means filling the unvulcanized rubber into the regions one by one through one inlet. When there are a plurality of inlets, this means injecting the unvulcanized rubber into the plurality of regions through the plurality of inlets.

The block may be made of a metal material. However, the block is preferably made of resin in terms of material cost, moldability, handleability, or the like. The resin specifically includes polyamide resin (nylon), polyester resin, polyacetal resin, ultrahigh molecular weight polyethylene, fluororesin, polyether ether ketone resin (PEEK), polybutylene terephthalate resin (PBT), polyphenylene sulphide resin (PPS), ABS resin, or the like, and resin that can be molded into various shapes and has heat resistance can be used.

It is preferable that a surface of the block is subjected to mold release treatment such as coating with a mold release agent typified by fluororesin or silicone resin. Thus, even the block in contact with the unvulcanized rubber in the die can be easily removed.

In the present invention, the space in the die is divided into the plurality of regions, and the unvulcanized rubber is introduced into the die for each region. Thus, the unvulcanized rubber can be filled into the die by transfer molding. Specifically, since a transfer pot in a transfer molding machine limits an amount of prepared unvulcanized rubber, a volume of moldable rubber molded products is conventionally limited. However, in this invention, the unvulcanized rubber is introduced into the die in several batches, thereby allowing transfer molding.

In the transfer molding, the unvulcanized rubber can be introduced into the die under higher pressure than in injection molding. Thus, the unvulcanized rubber can be supplied into the die at lower temperature than in the injection molding. Thus, even if it takes time to fill the unvulcanized rubber, there is no risk of occurrence of burns that reduce rubber properties after vulcanization.

Even for a large rubber molded product obtained by the manufacturing method according to the present invention, the unvulcanized rubber can be filled into the die while preventing bubbles or incomplete filling of rubber, and satisfactory rubber properties after vulcanization molding can be maintained. Thus, a bulk integral rubber molded product can be favorably manufactured.

The present invention also provides a transfer molding die, wherein a space in the die is divided into a plurality of regions, and each of the regions includes a block that is fittable into and removable from each region and can fill each region without clearance.

### Advantageous Effect of Invention

In the present invention, the space in the die for molding the rubber molded product is divided into the plurality of regions, and the process of filling the unvulcanized rubber into each of the regions is repeated. Thus, even in the case of manufacturing a large rubber molded product, a rubber molded product can be manufactured that can fill the unvulcanized rubber into the die while preventing bubbles or incomplete filling, and can maintain satisfactory rubber properties after vulcanization molding.

### Brief Description of Drawings

[Figure 1] Figure 1 is a sectional view showing a transfer molding die of the present invention being held between heating platens of a molding machine.
[Figure 2] Figure 2 is a plan view of the die in Figure 1.
[Figure 3] Figure 3 is an exploded sectional view of the die in Figure 1.
[Figure 4] Figure 4 is an exploded sectional view of a rubber filling upper die.
[Figure 5] Figure 5 is a perspective view of a block.
[Figure 6] Figure 6 is a sectional view showing a first upper die and a second middle die being removed from the die.
[Figure 7] Figure 7 is a plan view showing the die with unvulcanized rubber being filled into two regions.
[Figure 8] Figure 8 is a sectional view showing the rubber filling upper die being removed from the die having been filled with the unvulcanized rubber.
[Figure 9] Figure 9 is a sectional view showing an annular mounting plate being set in Figure 8.
[Figure 10] Figure 10 is a sectional view showing the die being closed using a vulcanizing upper die.
[Figure 11] Figure 11 is a sectional view showing a configuration of an air spring.
[Figure 12] Figure 12 is a plan view of the mold having two inlets.

### Description of Embodiment

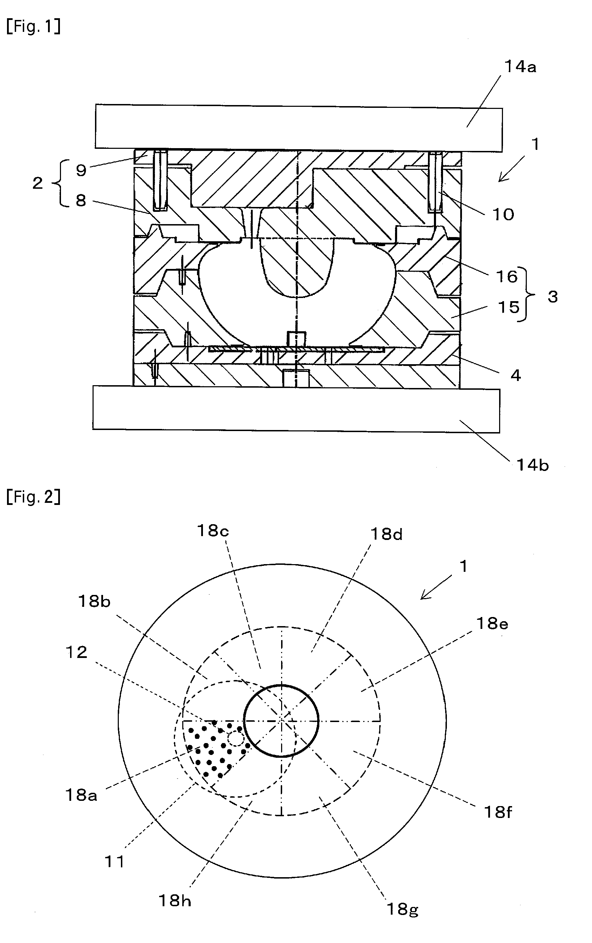

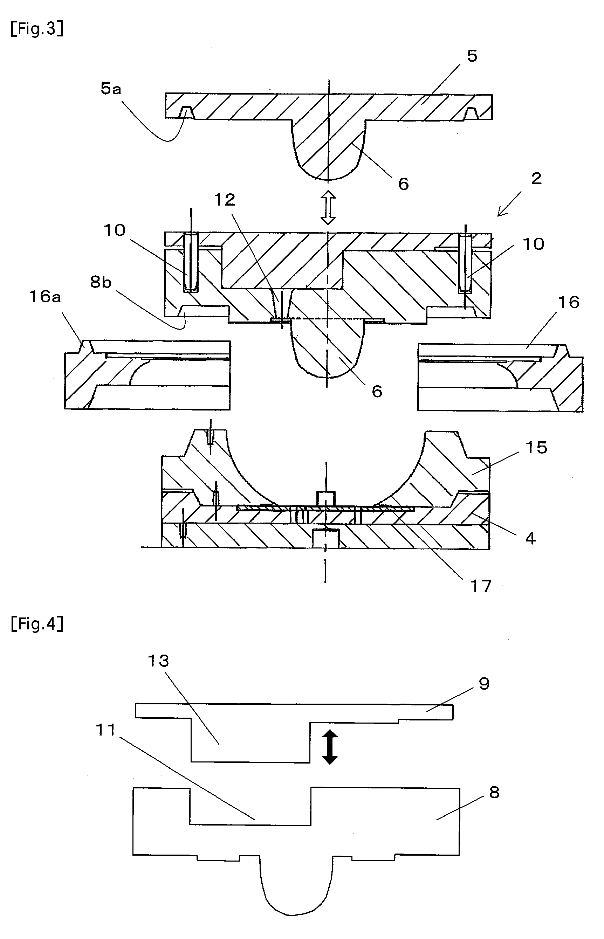

Now, an embodiment of the present invention will be described with reference to the drawings. In this embodiment, a case of manufacturing a stopper for an air spring as a rubber molded product using a transfer molding machine will be described. Figure 1 is a sectional view showing a transfer molding die (hereinafter referred to as a die) according to the present invention being held between heating platens of a transfer molding machine, Figure 2 is a plan view of the die, and Figure 3 is an exploded sectional view of the die.

As shown in Figures 1 to 3, a die 1 has a substantially cylindrical appearance and can be vertically divided into a rubber filling upper die 2, a middle die 3, and a lower die 4. The die 1 is placed between heating platens 14a and 14b of the transfer molding machine. In the die 1, the rubber filling upper die 2 can be replaced by a vulcanizing upper die 5.

The rubber filling die 2 is used for filling unvulcanized rubber, and after filling of the unvulcanized rubber into the die 1, the rubber filling die 2 is replaced by the vulcanizing upper die 5 to perform vulcanization molding. A boss 6 is formed at a lower surface of the rubber filling upper die 2 and the vulcanizing upper die 5 and a U-shaped recess is formed at a stopper 7 by the boss 6.

The rubber filling upper die 2 includes a first upper die 8 and a second upper die 9, and the second upper die 9 is placed on an upper side of the first upper die 8. As shown in Figure 1, a rod-shaped guide member 10 protrudes from a lower surface of the second upper die 9, and an engaging hole into which the guide member 10 engages is formed in an upper surface of the first upper die. Thus, the first upper die 8 and the second upper die 9 can be vertically separable. As shown in Figure 4, a recessed pot 11 into which the unvulcanized rubber is placed is formed in the upper surface of the first upper die 8, and an inlet 12 through which the unvulcanized rubber is injected is formed in a bottom surface of the pot 11. A protruding plunger 13 is formed at a position corresponding to the pot 11 in the first upper die 8, in the lower surface of the second upper die 9.

The second upper die 9 is mounted to the upper heating platen 14a of the transfer molding machine, and can be vertically moved with up-and-down movement of the heating platen 14a. With the heating platen 14a being moved up, the second upper die 9 is located away from and above the first upper die 8 as shown in Figure 4, and in that state, the unvulcanized rubber is placed into the pot 11. After the unvulcanized rubber is placed into the pot 11, the heating platen 14a is moved down to insert the plunger 13 into the pot 11, and the unvulcanized rubber in the pot 11 is injected into the die through the inlet 12.

The middle die 3 can be also vertically divided into a first middle die 15 and a second middle die 16 according to a shape of the stopper 7. Specifically, the stopper 7 as a rubber molded product has a thick bowl shape and has a maximum diameter at a middle of a height. Thus, the middle die 3 can be divided into an upper side and a lower side of a section with the maximum diameter so that the stopper 7 can be demolded from the die 1 after molding.

As shown in Figure 3, the second middle die 16 can be laterally divided into two parts so as to facilitate mold opening after vulcanization molding and further allow the stopper with mounting plates 17 and 21 being integrally molded to be removed from the die. Similarly, the first middle die 15 can be also laterally divided into two parts. A circular recess is formed at a center of an upper surface of the lower die 4, and the disk-shaped mounting plate 17 integrally bonded to a top of the stopper after vulcanization molding is set in the recess.

In the first middle die 15 and the lower die 4 described above, a plurality of pins are formed in one of contact surfaces thereof, and a plurality of engaging holes that engage the pins are formed in the other. Thus, the first middle die 15 and the lower die 4 engage each other at a predetermined position. Similarly, pins are formed in one of the first middle die 15 and the second middle die 16, and engaging holes are formed in the other, and the first middle die 15 and the second middle die 16 engage each other at a predetermined position and can be assembled as the die 1.

For the vulcanizing upper die 5 and the second middle die 16, an annular recess 5a is formed in a lower surface of the vulcanizing upper die 5, an annular protrusion 16a is formed in an upper surface of the second middle die 16, and thus the vulcanizing upper die 5 and the second middle die 16 can engage each other. An annular recess 8b is formed in a lower surface of the first upper die 8 similarly to the vulcanizing upper die 5.

Further, the pins are formed at a pitch of 45° over the entire circumference in one of a lower surface of the first upper die 8 and an upper surface of the second middle die 16, and engaging holes that engage the pins are formed at a pitch of 45° over the entire circumference in the other. Thus, the first upper die 8 and the second middle die 16 can fit each other every 45 degrees around a central axis of the die 1.

As shown by a broken line in Figure 2, the space in the die 1 is radially divided into eight regions 18a to 18h from the center of the die 1. The number of the regions is not particularly limited, but may be determined according to the shape and size of the rubber molded product. Four to ten regions are preferable. Among all the regions in the die, the regions 18b to 18h other than the one region 18a each include a block 19 that is fittable into and removable from each region and can fill each region without clearance.

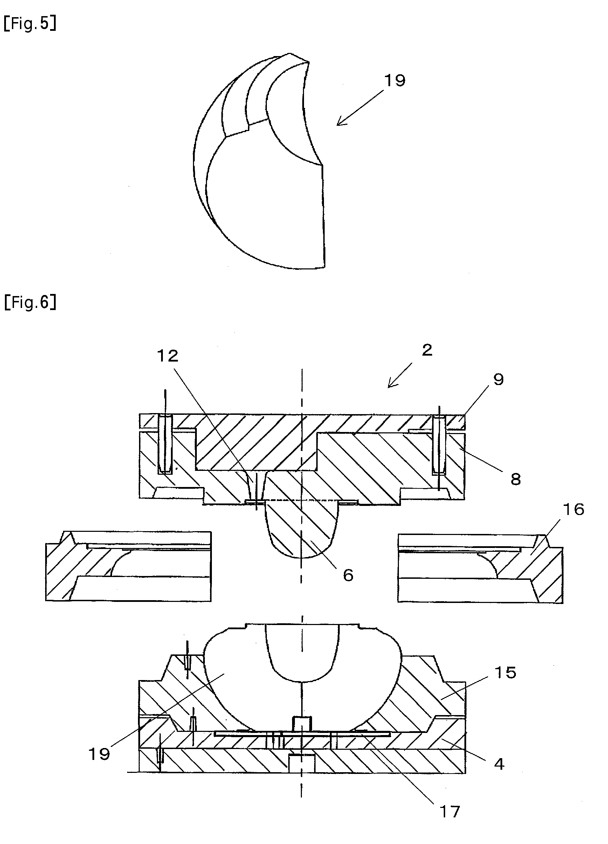

Figure 5 is a perspective view showing one block, and seven blocks are fitted into the die 1. It is preferable that a positioning protrusion (not shown) is formed in a surface of the block, and a recess (not shown) that can engage the protrusion is formed in an inner surface of the die 1. Thus, when the unvulcanized rubber is injected through the inlet 12, displacement of the block 19 due to pressure of the unvulcanized rubber can be prevented.

In Figure 2, the block 19 is not fitted into the region 18a communicating with the inlet 12, but the blocks 19 are fitted into the remaining regions 18b to 18h. The block 19 is made of polymerized and molded ε-Caprolactam (MC NYLON (registered trademark) manufactured by POLYPENCO JAPAN LTD.) in this embodiment.

A method for manufacturing the stopper 7 using the die 1 having the configuration described above will be described in detail. First, the rubber filling upper die 2 is used as an upper die, and as shown in Figure 6, the block 19 is fitted into a predetermined position in the die 1 as described above with the first upper die 8 and the second middle die 16 being removed. Then, the second middle die 16 and the first upper die 8 are assembled to close the die 1.

The second upper die 9 is mounted to the upper heating platen 14a, and the heating platen 14a is moved up to open the upper die 2. In that state, a predetermined amount of unvulcanized rubber is placed into the pot 11, and the heating platen 14a is moved down. Thus, the plunger 13 is pressed into the pot 11, and the unvulcanized rubber is injected through the inlet 12 into the die 1.

The unvulcanized rubber is injected to fill the unvulcanized rubber into the region 18a in the die, and then the second upper die 9 is moved up together with the heating platen 14a. Then, as shown in Figure 6, the first upper die 8 is removed and then the second middle die 16 is removed to take out the block 19 in the region 18b. Then, the second middle die 16 is assembled, and the middle die 3 and the lower die 4 are together rotated by 45° counterclockwise in Figure 2.

At this time, the first upper die 8 is not rotated, and is reassembled to the middle die (second middle die 16) so that the inlet 12 is located in the same position as in Figure 2. Thus, the empty region 18b communicates with the inlet 12. The second middle die 16 and the first upper die 8 are formed so as to fit each other every 45 degrees around the central axis of the die 1 as described above.

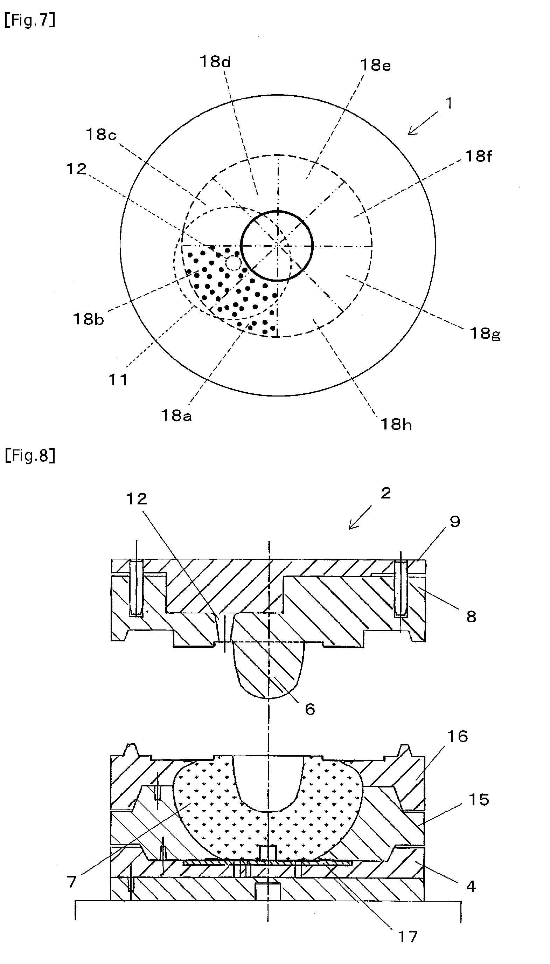

In that state, the second upper die 9 is set on the first upper die 8, a predetermined amount of unvulcanized rubber is placed into the pot 11, and the heating platen 14a is moved down. Thus, the plunger 13 is pressed into the pot 11, and the unvulcanized rubber is injected into the die 1 through the inlet 12. As such, as shown in Figure 7, the region 18b is filled with the unvulcanized rubber subsequently to the region 18a. The regions filled with the unvulcanized rubber are shown with dots.

Thereafter, as described above, the operation of taking out the block 19 in a region adjacent to the region filled with the unvulcanized rubber and filling the unvulcanized rubber into the region is repeated, thereby allowing the unvulcanized rubber to be filled into all the regions.

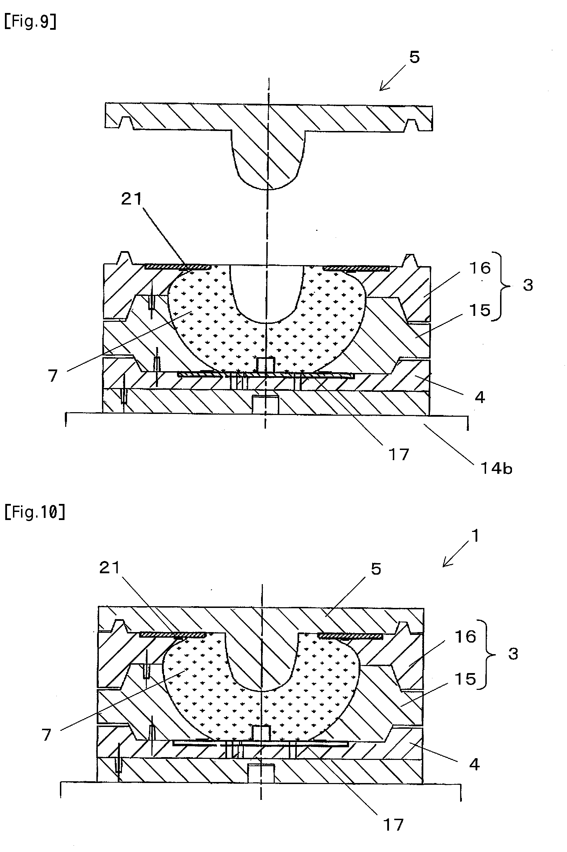

After all the regions are filled with the unvulcanized rubber, as shown in Figure 8, the rubber filling upper die 2 is removed (the second upper die 9 is also removed from the heating platen 14a). Then, as shown in Figure 9, an annular mounting plate 21 is fitted around the recess formed in the upper surface of the middle die (second middle die 16), and as shown in Figure 10, the vulcanizing upper die 5 is reassembled to the middle die 3.

Then, the heating platen 14a is again moved down, the die 1 is held between the heating platens 14a and 14b, and the unvulcanized rubber in the die 1 is heated and vulcanized. At this time, the boss of the vulcanizing upper die 5 is formed to be slightly larger than the boss 6 of the rubber filling upper die 2. Thus, when the heating platens 14a and 14b pressurize the die, the unvulcanized rubber in the die can be effectively pressurized, thereby obtaining an integral stopper 7 having high sealability.

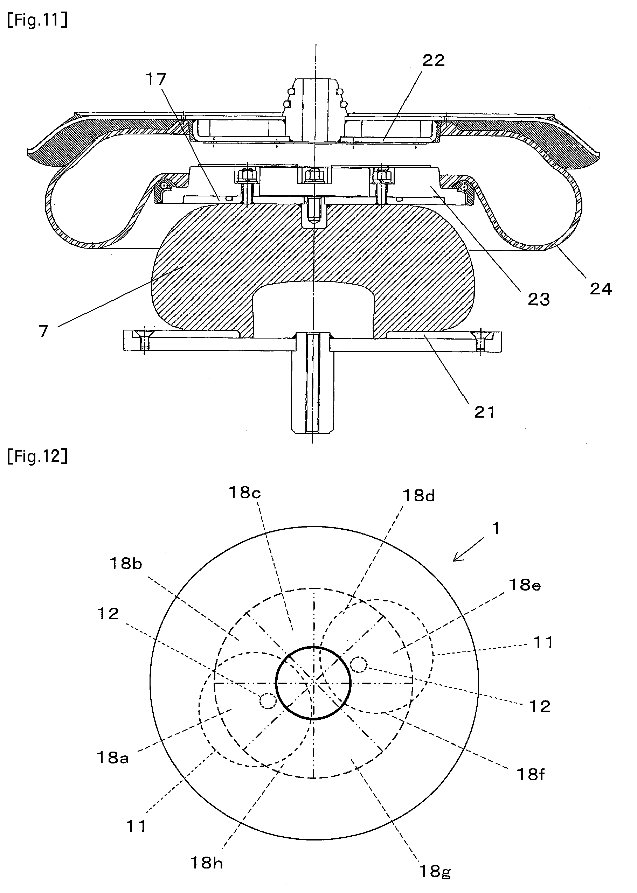

As shown in Figure 11, the stopper 7 thus obtained is used as a component of an air spring. The air spring includes, for example, an upper surface plate 22 mounted to a vehicle body, a lower surface plate 23 placed on a wheel side below the upper surface plate 22, a rubber diaphragm 24 placed across the upper surface plate 22 and the lower surface plate 23, and the stopper 7 interposed between the lower surface plate 23 and a support frame on the wheel side. The annular mounting plate 21 of the stopper 7 is mounted to the support frame (not shown) on the wheel side, and the disk-shaped mounting plate 17 of the stopper 7 is mounted to the lower surface plate 23.

As a molding condition in this embodiment, for example, a temperature of the die when the unvulcanized rubber is injected into each region can be 120°C to 140°C, preferably 125°C to 135°C. Further, as a vulcanization molding condition after filling of the unvulcanized rubber into all the regions, a vulcanization temperature can be 135°C to 140°C, and a vulcanization time can be 3 to 3.5 hours.

Specifically, in this embodiment, the unvulcanized rubber is injected into the die using the transfer molding machine, and thus high pressure of about 5 to 15 MPa can be applied to the unvulcanized rubber. Thus, the unvulcanized rubber can be injected into the die 1 at a lower temperature than the vulcanization temperature. Thus, even if it takes a considerable time to fill the unvulcanized rubber into all the regions in the die 1, burns do not occur in the vulcanization rubber. Also, there is no need for special equipment, thereby reducing manufacturing costs.

In this embodiment, the aspect in which one inlet 12 is formed in one die, and the unvulcanized rubber is filled into each region through the inlet 12 has been described, but not limited to this. For example, two inlets may be formed in one die. Specifically, as shown in Figure 12, inlets 12 and 12 are formed symmetrically from the center of the die. Correspondingly, two pots are provided in the first upper die 8 of the rubber filling upper die 2, and two plungers are provided in the second upper die 9.

Meanwhile, among the regions 18a to 18h in the die 1, the blocks 19 are fitted into six regions other than the regions 18a and 18e. Then, the second middle die 16 and the first upper die 8 are assembled to close the die 1 so that the inlets 12 and 12 communicate with the regions 18a and 18e. In that state, the plunger of the second upper die 9 is pressed into the first upper die 8 to simultaneously extrude the unvulcanized rubber from the two inlets 12 and 12. Thus, the regions 18a and 18e are simultaneously filled with the unvulcanized rubber.

Then, the blocks 19 in the regions 18b and 18f are removed, and as described above, the middle die 3 and the lower die 4 are together rotated by 45° counterclockwise in Figure 2 without changing a position of the rubber filling upper die 2 to extrude the unvulcanized rubber. This allows the unvulcanized rubber to be simultaneously filled into the regions 18b and 18f. Thereafter, the unvulcanized rubber can be similarly simultaneously filled into two regions in order of the regions 18c and 18g, and the regions 18d and 18h.

Specifically, in the present invention, the unvulcanized rubber may be filled into the regions one by one through one inlet. When a plurality of inlets are provided, the unvulcanized rubber can be simultaneously injected into a plurality of regions, thereby reducing a time for filling the unvulcanized rubber.

### Industrial Applicability

The present invention can be suitably used for manufacturing a large rubber molded product such as a stopper for an air spring of a vehicle or the like.

### Reference Signs List

| | |
|---|---|
| 1 | die |
| 2 | rubber filling upper die |
| 3 | middle die |
| 4 | lower die |
| 5 | vulcanizing upper die |
| 6 | boss |
| 7 | stopper |
| 8 | first upper die |
| 9 | second upper die |
| 11 | pot |
| 12 | inlet |
| 13 | plunger |
| 14a, 14b | heating platen |
| 15 | first middle die |
| 16 | second middle die |
| 17 | disk-shaped mounting plate |
| 18a to 18h | region |
| 19 | block |
| 21 | annular mounting plate |
| 22 | upper surface plate |
| 23 | lower surface plate |
| 24 | diaphragm |

## Claims

1. A method for manufacturing a rubber molded product in which unvulcanized rubber filled into a die through an inlet formed in the die is demolded after being heated and vulcanized, comprising the steps of:
dividing a space in the die into a plurality of regions; and
repeating a process of filling the unvulcanized rubber into each of the regions, thereby filling the unvulcanized rubber into all the regions.

2. The method for manufacturing a rubber molded product according to claim 1, further comprising the steps of:
fitting a block into each of regions other than a region communicating with the inlet among the plurality of regions, and thus filling the unvulcanized rubber into an empty region with the remaining regions being filled with the blocks without clearance, and
then repeating a process of displacing the inlet to remove the block in a region that newly communicates with the inlet, and filling the unvulcanized rubber into an empty region, thereby filling the unvulcanized rubber into all the regions.

3. The method for manufacturing a rubber molded product according to claim 2, wherein a plurality of inlets are formed in the die, and the unvulcanized rubber is simultaneously filled into the plurality of regions through the plurality of inlets.

4. The method for manufacturing a rubber molded product according to any one of claims 1 to 3, wherein the unvulcanized rubber is filled into the die by transfer molding.

5. The method for manufacturing a rubber molded product according to claim 4, wherein the rubber molded product is a stopper for an air spring.

6. A transfer molding die, wherein a space in the die is divided into a plurality of regions, and each of the regions includes a block that is fittable into and removable from each region and can fill each region without clearance.
